# EUROPÄISCHE PATENTSCHRIFT

(11) **EP 1 608 557 B1**
(45) Veröffentlichungstag und Bekanntmachung des Hinweises auf die Patenterteilung: **28.06.2006**
(21) Anmeldenummer: 04724489.2
(22) Anmeldetag: 31.03.2004
(51) Int. Cl.: B65B 5/10

(54) **ÜBERGABESTELLE IN EINEM KOMMISSIONIERSYSTEM**
DISCHARGE POINT IN A COMMISSIONING SYSTEM
POINT DE DEVERSEMENT POUR SYSTEME DE PREPARATION DE COMMANDES

(30) Priorität: 31.03.2003 AT 4982003
(43) Veröffentlichungstag der Anmeldung: 28.12.2005
(73) Patentinhaber: SSI Schäfer Peem GmbH, 8051 Graz-Gösting (AT)
(72) Erfinder: SCHÄFER,Gerhard c/o SSI Schäfer Fritz Schäfer GmbH, 57290 Neunkirchen (DE)
(74) Vertreter: Henhapel, Bernhard
(86) Internationale Anmeldenummer: PCT/AT2004/000113
(87) Internationale Veröffentlichungsnummer: WO 2004/087503

(56) Entgegenhaltungen:
- EP-A- 0 571 874
- FR-A- 1 491 666
- US-A- 4 372 730

## Beschreibung

Die vorliegende Erfindung bezieht sich auf ein Fördersystem mit mindestens einem Förderelement, vorzugsweise einem Förderband, wobei auf demselben beförderte Waren am Ende des Förderelements über eine schräg verlaufende Rutschfläche in einen unterhalb des Förderelements bereitstehenden Behälter abgegeben werden, der vorzugsweise von einer Einfüllhilfe umgeben ist und eine horizontal bewegliche Klappe vorgesehen ist, welche von einer die Behälteröffnung verschließenden Stellung in eine die Behälteröffnung freigebende Stellung bewegbar ist (siehe z.B. das Dokument EP-A-0 571 874), gemaß dem Oberbegriff des Anspruchs 1.

Übergabestationen ohne einer die Behälteröffnung verschließenden Klappe sind beispielsweise aus der US 2002/0170850 oder der EP 183.074 A1 bekannt.

Obwohl auch Ausführungen dieser Übergabestationen bekannt sind, bei welchen Einfüllhilfen in Form von den Behälter dreiseitig umgebenden, vorzugsweise trichterförmigen Wänden vorgesehen sind, um das unbeabsichtigte Herausspringen und Beschädigen der Waren aus dem Behälter zu verhindern, schränken die in Abhängigkeit vom Produkt doch recht großem Fallhöhen den Einsatz solcher Übergabestationen stark ein, da empfindliche und schwere Produkte durch den freien Fall beschädigt werden können.

Um einerseits die Fallhöhe zu reduzieren und andererseits einen Behälterwechsel zu ermöglichen, ohne das Förderelement stoppen zu müssen, ist es bei bekannten Übergabestationen auch bekannt, zusätzlich eine horizontal bewegliche, die Öffnung des bereitstehenden Behälters verschließbare Klappe vorzusehen. Diese wird während eines Behälterwechsels zwischen die schräg verlaufende Rutschfläche und den Behälter bewegt, so dass das Förderelement nicht gestoppt werden muss und die Waren weiterbefördert werden können. Diese werden dann über die schräg verlaufende Rutsche auf die die Behälteröffnung versperrende Klappe befördert. Unter dieser Klappe findet zwischenzeitlich der Behälterwechsel statt. Sobald dieser abgeschlossen ist, wird die bewegliche Klappe parallel zum Behälterboden zurückgezogen, wodurch die Behälteröffnung wieder freigegeben wird und die Waren in den Behälter fallen können.

Jedoch selbst in diesem Fall verbleibt zumindest die Behälterhöhe, welche die Waren im freien Fall zurücklegen müssen, wodurch jedoch die Gefahr der Beschädigung der Waren gegeben ist.

Aus der JP 06316326 A ist eine relativ aufwändige Methode bekannt, die Waren von der Förderstrecke in den Behälter zu befördern, wobei eine Art Aufzug Verwendung findet, welche die Waren vom Niveau der Förderstrecke hinab auf den Behälterboden befördert. Neben dem erwähnten erforderlichen hohen Konstruktionsaufwand ist auch die Durchlaufzeit bei einem solchen System stark beschränkt, da das Verfahren der Klappe sehr viel Zeit in Anspruch nimmt.

Es ist daher die Aufgabe der vorliegenden Erfindung die beschribenen Nachteil zu verhindern und ein Fördersystem vorzuschlagen, welches eine Übergabe der Waren vom Förderelement in den bereitstehenden Behälter ermöglicht, ohne die Waren der Gefahr einer Beschädigung auszusetzen.

Erfindungsgemäß wird dies durch die kennzeichnenden Merkmale des Anspruchs 1 erreicht.

Dadurch wird verhindert, dass beim Zurückziehen der beweglichen Klappe, die Waren frei in den bereitgestellten Behälter fallen. Der freie Fall wird durch Verwendung der beweglichen Klappe als eine in den Behälter ragende, weitere Rutschfläche gebremst. Die Klappe wird zu diesem Zwecke von der die Behälteröffnung verschließenden Position in eine Position parallel zur vorhandenen schräg verlaufenden Rutschfläche geschwenkt. Dadurch senkt sich das eine Ende der Klappe, auf welcher die Waren zu liegen gekommen sind, in den Behälter. Nachdem die Schwenkbewegung vollendet ist, wird die Klappe parallel zur schräg verlaufenden Rutschfläche eingezogen, wodurch mehr Volumen des Behälters freigegeben wird und die Waren in den Behälter rutschen können. Auf diese Art und Weise wird verhindert, dass die Waren dem freien Fall in den Behälter ausgesetzt werden.

Gemäß dem kennzeichnenden Merkmal des Anspruchs 2 kann die bewegliche Klappe bis nahe an den Behälterboden herangefahren werden, um das Herabfallen der Waren gänzlich zu vermeiden. Im gleichen Maße wie sich der Behälter füllt, wird die bewegliche Klappe zurückgezogen und dadurch das Volumen im Behälter entsprechende dem Füllgrad kontinuierlich erhöht.

Das kennzeichnende Merkmal des Anspruchs 3 ermöglicht es, die bewegliche Klappe in die Stellung parallel zur schräg verlaufenden Rutschfläche zu bewegen. Dies geschieht bevorzugterweise über eine an einem Ende der Klappe angeordnete Hebevorrichtung, vorzugsweise einem pneumatischen Zylinder.

Gemäß dem kennzeichnenden Merkmal des Anspruchs 4 ist die schwenkbare Klappe aus zwei gegeneinander verschiebbare, übereinander angeordnete Plattenelemente aufgebaut. Aufgrund dieser vorteilhaften Ausgestaltung ist es möglich, das eine Plattenelement als Führungsschiene zu verwenden, auf welcher das andere Plattenelement seine translatorische Bewegung ausführen kann. Die Bewegung als solche wird dabei durch eine zwischen den beiden Plattenelementen angeordnete Verschiebevorrichtung ermöglicht, welche gemäß kennzeichnendem Merkmal des Anspruchs 5 ein Pneumatikzylinder ist.

Eine besondere Ausgestaltung eines erfindungsgemäßen Fördersystems sieht vor, dass durch die besondere Ausgestaltung des Querschnitts des einen Plattenelementes gemäß kennzeichnendem Merkmal des Anspruchs 6 die Verschiebevorrichtung in einem von den beiden Plattenelementen gebildeten Hohlraum angeordnet werden kann.

Das kennzeichnende Merkmal des Anspruchs 7 beschreibt eine weitere bevorzugte Ausgestaltung der Erfindung.

Im Anschluss erfolgt nun eine detaillierte Beschreibung der Erfindung. Dabei zeigt:
- Fig.1: eine Seitenansicht einer erfindungsgemäßen Übergabestation mit geschlossener Klappe
- Fig.2: eine Seitenansicht einer erfindungsgemäßen Übergabestation mit in den Behälter ragender Klappe
- Fig.3: eine Seitenansicht einer erfindungsgemäßen Übergabestation mit zurückgezogener Klappe in schräger Position
- Fig.4: eine Seitenansicht einer erfindungsgemäßen Übergabestation mit zurückgezogener Klappe in horizontaler Position
- Fig.5: eine Seitenansicht einer erfindungsgemäßen Übergabestation mit geschlossener Klappe
- Fig.6: eine Schrägansicht einer erfindungsgemäßen Übergabestation mit geschlossener Klappe
- Fig.7: eine Seitenansicht einer erfindungsgemäßen Übergabestation mit geschlossener Klappe

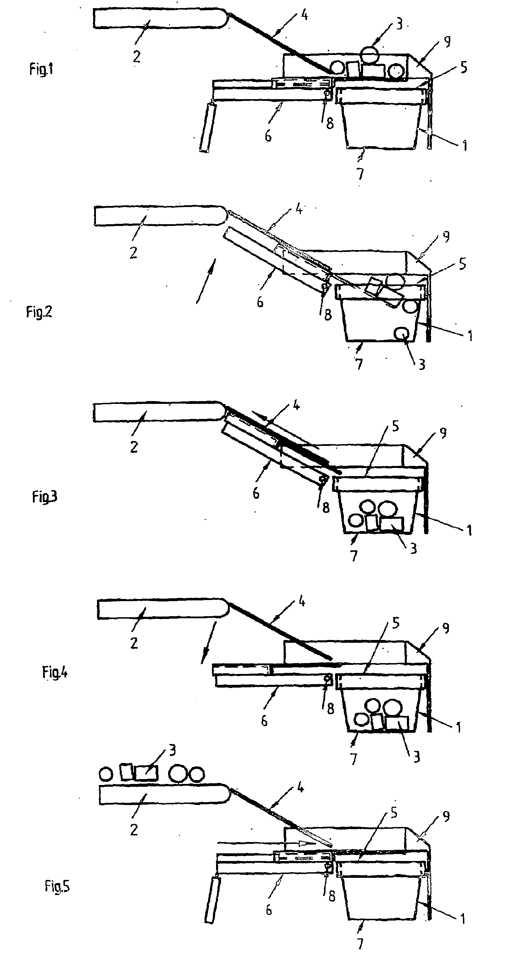

Fig.1 zeigt eine schematische Seitenansicht einer erfindungsgemäßen Übergabestation. Dabei ist ein vorzugsweise an einem Förderband 10 heranbeförderter Behälter 1 unterhalb eines Förderelements 2, vorzugsweise eines Förderbandes, bereitgestellt. Am Förderband 2 werden Waren 3 transportiert, die in den bereitgestellten Behälter 1 befördert werden sollen. Zu diesem Zweck ist eine schräg verlaufende Rutschfläche 4 vorgesehen, die zwischen Förderband 2 und Behälter 1 angeordnet ist. Die Rutschfläche 4 reicht bis nahe an die Oberkante 5 des Behälters 1 heran und ist in diesen hineingerichtet. Unterhalb der Rutschfläche 4 ist eine Klappe 6 angeordnet die im wesentlichen horizontal beweglich gelagert ist, um die Behälteröffnung zu verschließen bzw. freizugeben. In Fig.1 ist diese Klappe 6 in jener die Behälteröffnung verschließenden Stellung gezeichnet. Auf der Klappe 6 sind Waren 3 gestapelt die durch das kontinuierlich betriebene Förderelement 2 heranbefördert wurden. Durch die Verwendung der die Behälteröffnung verschließenden Klappe 6 kann das Förderelement 2 trotz Wechsel des Behälters 1 ohne Stillstand weiterbetrieben werden. Die über die Rutschfläche 4 in den Behälter 1 rutschenden Waren 3 werden auf der Klappe 6 zwischengelagert.

Ist der Behälterwechsel beendet, erfolgt in weiterer Folge wie aus Fig.2 ersichtlich ist, zuerst das Schwenken der Klappe 6 um eine Achse 8, wodurch sie in eine Position parallel zur Rutschfläche 4 gebracht wird. Es ist jedoch auch denkbar, dass die Klappe 6 in eine Position gebracht wird, in welcher sie einen Winkel mit der Rutschfläche 4 einschließt. Durch das Verschwenken der Klappe bewegt sich jedenfalls deren einer Endbereich in den Behälter 1 hinein und bildet so praktisch eine Verlängerung der Rutschfläche 4, wodurch gleichzeitig auch die auf der Klappe 6 befindlichen Waren 3 in den Behälter 1 hineinrutschen. In dieser Position, in welcher die Klappe 6 noch voll ausgefahren ist, wird jedoch ein Grossteil des Behältervolumens durch den in den Behälter 1 hineinragenden Teil der Klappe 6 versperrt. Aus diesem Grund wird mit steigendem Befüllungsgrad des Behälters 1 die Klappe 6 kontinuierlich zurückgezogen. Die Bewegung erfolgt dabei vorzugsweise mit hoher Geschwindigkeit, um den gesamten Übergabeprozess nicht unnötig zu verlangsamen.

Fig.3 zeigt die Klappe 6 in der komplett eingezogenen Stellung, in welcher sie zwar parallel zur Rutschfläche 4 angeordnet ist, jedoch nicht in den Behälter 1 hineinragt. Die Waren 3 sind zu diesem Zeitpunkt bereits komplett in den Behälter 1 übergeben worden, der nunmehr wieder auswechselbereit ist.

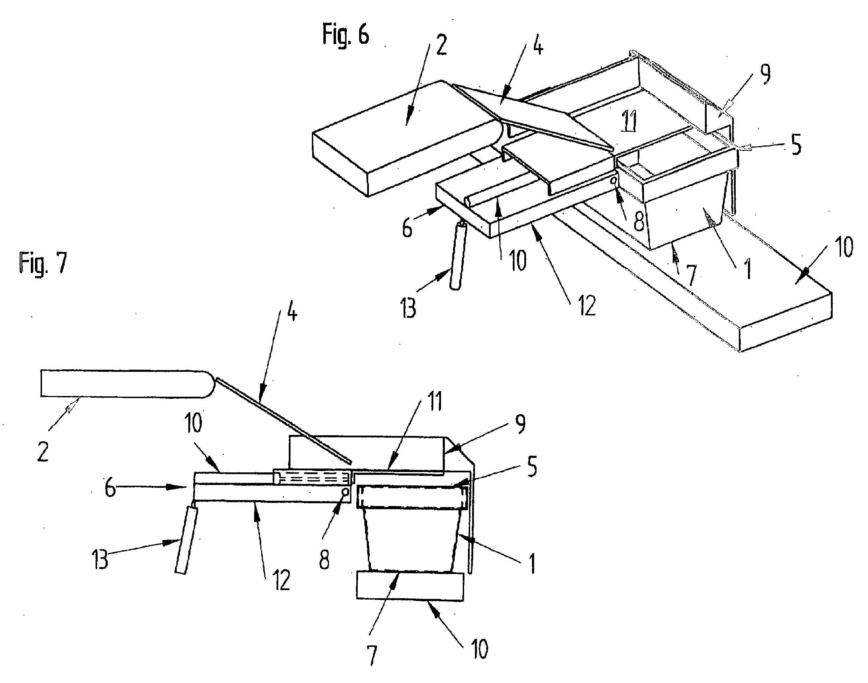

Zu diesem Zwecke wird die Klappe 6 wieder um die Achse 8 geschwenkt, wodurch sie in eine im wesentlichen horizontale Position wie aus Fig. 4 ersichtlich, gelangt, von welcher Sie wieder über die Behälteröffnung geschoben wird, um den Behälterwechsel zu ermöglichen, wie aus Fig.5 ersichtlich.

Fig.6 zeigt eine detaillierte Schrägansicht einer erfindungsgemäßen Übergabestation mit geschlossener Klappe 6, wobei auch die Einfüllhilfe 9 sehr gut erkennbar ist, welche aus die Behälteröffnung umgebende, sich nach oben erstreckende Wandelemente aufgebaut ist und dazu dient, das unbeabsichtigte Herausfallen von Waren aus dem Behälter 1 zu verhindern. Das vordere, dem Betrachter nähere Wandelement wurde der Übersichtlichkeit halber nicht gezeichnet.

Die bewegliche Klappe 6 ist aus zwei gegeneinander verschiebbare, übereinander angeordneten Plattenelementen 11,12 aufgebaut, die zwischen sich eine Verschiebevorrichtung 10 aufnehmen, die die Relativbewegung der beiden Plattenelemente 11,12 zueinander bewerkstelligt. Die Verschiebevorrichtung 10 ist im vorliegenden Beispiel als pneumatischer Zylinder ausgebildet, der das Gleiten des oberen Plattenelementes 11 am unteren Plattenelement 12 und damit das Ein- und Ausfahren in bzw. aus dem Behälter 1 ermöglicht. Das obere Plattenelement 11 ist dabei im Querschnitt zumindest teilweise U-förmig aufgebaut, so dass es gemeinsam mit dem unteren Plattenelement 12 einen Hohlraum begrenzt in welchem der pneumatische Zylinder 10 angeordnet ist.

Ein weiterer pneumatischer Zylinder 13 ist im Endbereich der Klappe 6 genauer gesagt des Plattenelementes 12 angeordnet. Dieser pneumatische Zylinder 13 steuert das Schwenken um die Achse 8.

## Patentansprüche

1. Fördersystem mit mindestens einem Förderelement (2), vorzugsweise einem Förderband, wobei auf demselben beförderte Waren (3) am Ende des Förderelementes (2) über eine schräg verlaufende Rutschfläche (4) in einen unterhalb des Förderelementes (2) bereitstehenden Behälter (1) abgegeben werden, der vorzugsweise von einer Einfüllhilfe (9) umgeben ist und eine horizontal bewegliche Klappe (6) vorgesehen ist, welche von einer die Behälteröffnung verschließenden Stellung in eine die Behälteröffnung freigebende Stellung bewegbar ist, **dadurch gekennzeichnet, dass** die bewegliche Klappe (6) in der die Behälteröffnung verschließenden Stellung in eine Stellung parallel zur schräg verlaufenden Rutschfläche (4) schwenkbar ist und in dieser Stellung parallel zur Rutschfläche (4) beweglich gelagert ist, um eine in den Behälter (1) hineinragende, die schräge Rutschfläche (4) verlängernde zweite Rutschfläche zu bilden.

2. Fördersystem nach Anspruch 1, **dadurch gekennzeichnet, dass** die bewegliche Klappe (6) in ihrem geschwenkten und ausgefahrenen Zustand bis an den Behälterboden (7) heranreicht.

3. Fördersystem nach einem der Ansprüche 1 und 2, **dadurch gekennzeichnet, dass** sich die Schwenkachse (8) der beweglichen Klappe (6) unmittelbar neben der Oberkante (5) des Behälters (1) befindet und an dem dem Behälter (1) abgewandten Endbereich der Klappe (6) eine Hebevorrichtung (13) vorzugsweise ein pneumatischer Zylinder angreift, der die Schwenkbewegung bewerkstelligt.

4. Fördersystem nach einem der Ansprüche 1 bis 3, **dadurch gekennzeichnet, dass** die schwenkbare Klappe (6) aus zwei gegeneinander verschiebbare, übereinander angeordneten Plattenelementen (11,12) aufgebaut ist, zwischen welchen ein die Relativbewegung zwischen den beiden Plattenelementen (11,12) bewerkstelligende Verschiebevorrichtung (10) angeordnet ist.

5. Fördersystem nach Anspruch 4, **dadurch gekennzeichnet, dass** die Verschiebevorrichtung (10) ein pneumatischer Zylinder ist.

6. Fördersystem nach einem der Ansprüche 4 und 5, **dadurch gekennzeichnet, dass** das obere Plattenelement (11) zumindest teilweise im wesentlichen U-förmigen Querschnitt aufweist dessen Basis und Schenkel mit der Oberfläche des anderen, unteren Plattenelementes (12) einen Hohlraum definieren, in welchem die Verschiebevorrichtung (10) angeordnet ist.

7. Fördersystem nach einem der Ansprüche 4 bis 6, **dadurch gekennzeichnet, dass** lediglich das obere, den U-förmigen Querschnitt aufweisende Plattenelement (11) in den Behälter (1) bewegbar ist.

## Claims

1. A conveying system with at least one conveying element (2), preferably a conveyor belt, with goods (3) conveyed on the same being delivered at the end of the conveying element (2) via an inclined sliding surface (4) to a container (1) situated beneath the conveying element (2), which container is preferably enclosed by a filling aid (9), and a horizontally movable flap (6) is provided which can be moved from a position closing the container opening to a position releasing the container opening, **characterized in that** the movable flap (6) in the position sealing the container opening can be pivoted to a position parallel to the inclined sliding surface (4) and is movably held in this position parallel to the sliding surface (4) in order to form a second sliding surface projecting into the container (1) and extending the inclined sliding surface (4).

2. A conveying system according to claim 1, **characterized in that** the movable flap (6) reaches up to the container floor (7) in its pivoted and extended state.

3. A conveying system according to one of the claims 1 and 2, **characterized in that** the swiveling axis (8) of the movable flap (6) is situated directly adjacent to the upper edge (5) of the container (1) and a lifting apparatus (13), preferably a pneumatic cylinder, acts upon the same at the end region of the flap (6) averted from the container (1), which pneumatic cylinder causes the pivoting movement.

4. A conveying system according to one of the claims 1 to 3, **characterized in that** the swivelable flap (6) is composed of two mutually displaceable, superimposed plate elements (11, 12) between which a displacing apparatus (10) is arranged which causes the relative movement between the two plate elements (11, 12).

5. A conveying system according to claim 4, **characterized in that** the displacing apparatus (10) is a pneumatic cylinder.

6. A conveying system according to one of the claims 4 and 5, **characterized in that** the upper plate element (11) comprises at least partly a substantially U-shaped cross section whose base and legs define a hollow space with the surface of the other, lower plate element (12) in which the displacing apparatus (10) is arranged.

7. A conveying system according to one of the claims 4 to 6, **characterized in that** merely the upper plate element (11) comprising the U-shaped cross section is movable into the container.

## Revendications

1. Système de transport avec au moins un élément de transport (2), de préférence une courroie de transport, dans lequel les marchandises (3) transportées sur l'élément de transport (2) sont déposées à l'extrémité de celui-ci, en passant par une surface de glissière (4) oblique, dans un récipient (1) préparé en dessous de l'élément de transport (2), qui est entouré de préférence d'une aide au remplissage (9), et il est prévu un volet (6) mobile horizontalement qui peut être déplacé entre une position fermant l'ouverture du récipient et une position dégageant l'ouverture du récipient, **caractérisé en ce que** le volet mobile (6) peut pivoter dans la position fermant l'ouverture du récipient dans une position parallèle à la surface de glissière (4) oblique et est supporté de manière mobile dans cette position parallèle à la surface de glissière (4), pour former une deuxième surface de glissière s'étendant dans le récipient (1) et prolongeant la surface de glissière (4) oblique.

2. Système de transport selon la revendication 1, **caractérisé en ce que** le volet mobile (6) va jusqu'au fond (7) du récipient dans sa position basculée et sortie.

3. Système de transport selon l'une quelconque des revendications 1 et 2, **caractérisé en ce que** l'axe de pivotement (8) du volet mobile (6) se trouve juste à côté du bord supérieur (5) du récipient (1) et un dispositif de levage (13), de préférence un vérin pneumatique, se met en prise dans la partie d'extrémité du volet (6) éloignée du récipient (1) et réalise le mouvement de pivotement.

4. Système de transport selon l'une quelconque des revendications 1 à 3, **caractérisé en ce que** le volet pivotant (6) est formé de deux éléments de plaque (11, 12) coulissant l'un par rapport à l'autre et disposés l'un au-dessus de l'autre, entre lesquels un dispositif de translation (10) réalisant le mouvement relatif entre les deux éléments de plaque (11, 12) est disposé.

5. Système de transport selon la revendication 4, **caractérisé en ce que** le dispositif de translation (10) est un vérin pneumatique.

6. Système de transport selon l'une quelconque des revendications 4 et 5, **caractérisé en ce que** l'élément de plaque supérieur (11) a au moins en partie une section sensiblement en forme de U, dont la base et les bras définissent avec la surface de l'autre élément de plaque inférieur (12) une cavité dans laquelle le dispositif de translation (10) est disposé.

7. Système de transport selon l'une quelconque des revendications 4 à 6, **caractérisé en ce que** seul l'élément de plaque supérieur (11) à section en forme de U peut être amené dans le récipient (1).
